# EUROPEAN PATENT SPECIFICATION

(11) **EP 4 273 754 B1**
(45) Date of publication and mention of the grant of the patent: **09.09.2026**
(21) Application number: 22745261.2
(22) Date of filing: 26.01.2022
(51) Int. Cl.: G06N 3/04, G06N 3/084, G06N 3/048, G06N 3/0464

(54) **NEURAL NETWORK TRAINING METHOD AND RELATED DEVICE**
TRAININGSVERFAHREN FÜR NEURONALES NETZWERK UND ZUGEHÖRIGE VORRICHTUNG
PROCÉDÉ DE FORMATION DE RÉSEAU NEURONAL ET DISPOSITIF ASSOCIÉ

(30) Priority: 30.01.2021 CN 202110132041
(43) Date of publication of application: 08.11.2023
(73) Proprietor: Huawei Technologies Co., Ltd., Shenzhen, Guangdong 518129 (CN)
(72) Inventor: XU, Yixing, Shenzhen, Guangdong 518129 (CN); HAN, Kai, Shenzhen, Guangdong 518129 (CN); TANG, Yehui, Shenzhen, Guangdong 518129 (CN); WANG, Yunhe, Shenzhen, Guangdong 518129 (CN); XU, Chunjing, Shenzhen, Guangdong 518129 (CN)
(74) Representative: Thun, Clemens
(86) International application number: PCT/CN2022/073955
(87) International publication number: WO 2022/161387

(56) References cited:
- CN-A- 111 505 706
- CN-A- 111 523 637
- CN-A- 113 159 273
- US-A1- 2017 286 830
- MINGBAO LIN ET AL: "Rotated Binary Neural Network", ARXIV.ORG, CORNELL UNIVERSITY LIBRARY, 201 OLIN LIBRARY CORNELL UNIVERSITY ITHACA, NY 14853, 22 October 2020 (2020-10-22), XP081792798
- LIU ZECHUN ET AL: "Bi-Real Net: Enhancing the Performance of 1-Bit CNNs with Improved Representational Capability and Advanced Training Algorithm", 7 October 2018, 20181007, PAGE(S) 747 - 763, XP047635654

## Description

This application claims priority to Chinese Patent Application No. 202110132041.6, filed with the China National Intellectual Property Administration on January 30, 2021 and entitled "NEURAL NETWORK TRAINING METHOD AND RELATED DEVICE.

### TECHNICAL FIELD

Embodiments of this application relate to the field of deep learning technologies, and in particular, to a neural network training method and a related device.

### BACKGROUND

Deep Learning (DL) is a new research direction in the field of machine learning (ML), and is introduced into machine learning to make machine learning closer to an original goal: artificial intelligence (AI).

With the development of deep learning technologies, a deep neural network (DNN) has been widely used in various fields. For example, as a type of the deep neural network, a convolutional neural network (CNN) has been successfully applied to fields such as image classification and object detection. However, application of the convolutional neural network requires huge computing resources. Therefore, it is difficult to directly apply the convolutional neural network to a device with a limited computing capability, for example, a mobile phone, a camera, or a robot.

To resolve this problem, many compression algorithms and acceleration algorithms of a neural network are proposed. Applying these algorithms to the deep neural network can bring a very high compression ratio and a very high acceleration ratio, and has little impact on precision of the original network. One method is performing binarization processing on a weight that occupies a large amount of space, to obtain a binary neural network (BNN), so as to reduce storage space required by the convolutional neural network. Moreover, binarization processing is performed on an activation value that occupies a large amount of space, to improve an operation speed of the neural network.

Generally, a Sign function is used to perform binarization on a weight and an activation value of a 32-bit (bit) floating point number of the convolutional neural network, to convert the weight and the activation value of the 32-bit floating point number into 1 or -1. In this way, now only 1 bit is required to store the weight and the activation value that originally require 32 bits to store, thereby saving the storage space.

However, a gradient of the Sign function is represented as an impulse function, in other words, a gradient at a position 0 is infinite, and gradients at other positions are 0. Therefore, in a process of training the binary neural network, backward propagation cannot be performed by using the gradient of the Sign function.

Currently, a straight through estimator (STE) is mainly used to resolve a problem that backward propagation cannot be performed by using the gradient of the Sign function. Specifically, in a backward propagation process, the gradient of the Sign function is not calculated, but a gradient of a neural network above a neural network in which the Sign function is located is directly back-propagated.

Because the gradient of the Sign function is ignored in the backward propagation process, precision of a binary neural network trained by using the straight through estimator is low.
Further, the document Mingbao Lin et. al.: "Rotated Binary Neural Network", Arxiv.org, Cornell University Library, October 2020 refers to a rotated binary neura network.
Further, the document Liu Zechnun et. al.:"Bi-Real Net: Enhancing the Performance of 1-Bit CNNs with Improved Representational Capability and Advanced Training Algorithm", October 7, 2018, pages 747 - 763, refers to 1-Bit CNNs with an improved representational capability and advanced training algortihm.

### SUMMARY

Embodiments of this application provide a neural network training method and a related device. In the training method, a gradient of a fitting function is used to replace a gradient of a binarization function, so that precision of a trained neural network can be improved. This problem is solved by the subject matter of the independent claims. Further implementation forms are provided in the dependent claims.

A first aspect of embodiments of this application provides a neural network training method, including: performing, in a forward propagation process, binarization processing on a target weight by using a binarization function, to obtain a weight of a first neural network layer in a neural network. The first neural network layer is a neural network layer in the neural network, and the first neural network layer may be specifically a convolutional layer. The binarization function is a function in which a dependent variable has only two values for different value ranges of an independent variable, and the binarization function has a plurality of types. For example, the target weight may be converted to +1 or -1, or the target weight may be converted to +1 and 0. The method further includes: calculating, in a backward propagation process, a gradient of a loss function with respect to the target weight by using a gradient of a fitting function as a gradient of the binarization function, where the fitting function is determined based on series expansion of the binarization function.

Forward propagation means that intermediate variables of all layers of the neural network are successively calculated according to an order of the neural network from an input layer to an output layer, where the intermediate variable may be an output value of each layer of the neural network. Backward propagation means that the intermediate variables of all the layers of the neural network and a derivative of the loss function with respect to each parameter are successively calculated according to an order of the neural network from the output layer to the input layer, where the intermediate variable may be the output value of each layer of the neural network.

In the forward propagation process, binarization processing is performed on the target weight by using the binarization function, to obtain the weight of the first neural network layer in the neural network, thereby reducing storage space occupied by the first neural network layer. Because a weight obtained through binarization processing may be +1 or -1, or may be +1 or 0, a multiplication operation can be changed to an addition operation, and an operation amount can be reduced. In the backward propagation process, the gradient of the loss function with respect to the target weight is calculated by using the gradient of the fitting function as the gradient of the binarization function, to resolve a problem that backward propagation cannot be performed by using the gradient of the binarization function. In addition, the fitting function is determined based on the series expansion of the binarization function. Therefore, a fitting degree between the fitting function and the binarization function is higher, and fitting effect is better. Therefore, training effect of the neural network can be improved, and high accuracy of a trained neural network can be ensured.

In an implementation, a data type of the target weight is a 32-bit floating point type, a 64-bit floating point type, a 32-bit integer type, or an 8-bit integer type. In addition, the data type of the target weight may alternatively be another data type as long as storage space of the target weight is greater than storage space of the weight obtained through binarization processing.

This implementation provides a plurality of possible data types of the target weight.

The fitting function includes a plurality of subfunctions, and the plurality of subfunctions are determined based on the series expansion of the binarization function.

The plurality of subfunctions are determined based on the series expansion of the binarization function, and the fitting function includes the plurality of subfunctions. Therefore, the fitting degree between the fitting function and the binarization function is high, and the training effect of the neural network can be improved.

The fitting function includes a plurality of subfunctions and an error function, the plurality of subfunctions are determined based on the series expansion of the binarization function, and the error function has a plurality of forms, and is fitted by a two-layer fully connected neural network with a residual.

The error function is introduced into the fitting function. The error function can compensate for an error between the gradient of the fitting function and the gradient of the binarization function, and can also compensate for an error between the gradient of the binarization function and an ideal gradient. Therefore, impact of the error on the gradient of the fitting function is reduced, and accuracy of the gradient of the fitting function is improved.

The error function is fitted by a two-layer fully connected neural network with a residual. The two-layer fully connected neural network is a neural network in which any neuron in one neural network layer is connected to all neurons in the other neural network layer. The residual refers to a difference between an actual observation value and an estimated value (a value fitted by the neural network). Because the two-layer fully connected neural network with a residual is used to fit the error function, the two-layer fully connected neural network with a residual may also be referred to as an error fitting module.

The two-layer fully connected neural network may be considered as a part of the neural network in which the first neural network layer is located. If the two-layer fully connected neural network includes a third neural network layer and a fourth neural network layer, the error function may be expressed as e(x) = σ(x*W*₁)*W*₂ + *δ*(x), where *W*₁ indicates a weight of the third neural network layer in the neural network, *W*₂ indicates a weight of the fourth neural network layer in the neural network, σ(x*W*₁) indicates an activation function, *δ*(x) indicates a residual module, and x indicates the target weight. The residual module *δ*(x) has a plurality of forms. This is not specifically limited in this embodiment of this application. For example, the residual module may be 0, x, or sin(x).

This implementation provides a specific fitting manner of the error function.

The calculating, in a backward propagation process, a gradient of a loss function with respect to the target weight by using a gradient of a fitting function as a gradient of the binarization function includes: calculating, in the backward propagation process, gradients of the plurality of subfunctions with respect to the target weight; calculating a gradient of the two-layer fully connected neural network with a residual with respect to the target weight; and calculating the gradient of the loss function with respect to the target weight based on the gradients of the plurality of subfunctions with respect to the target weight and the gradient of the two-layer fully connected neural network with a residual with respect to the target weight. Specifically, a sum of the gradients of the plurality of subfunctions with respect to the target weight and the gradient of the two-layer fully connected neural network with a residual with respect to the target weight may be calculated first. Then, the sum is multiplied by a gradient of the loss function with respect to the weight of the first neural network layer, to obtain the gradient of the loss function with respect to the target weight.

In the backward propagation process, the gradients of the plurality of subfunctions with respect to the target weight and the gradient of the two-layer fully connected neural network with a residual with respect to the target weight are calculated, and the gradient of the loss function with respect to the target weight is calculated based on the gradients of the plurality of subfunctions with respect to the target weight and the gradient of the two-layer fully connected neural network with a residual with respect to the target weight. Because the two-layer fully connected neural network with a residual is used to fit the error function, the gradient of the two-layer fully connected neural network with a residual with respect to the target weight compensates for the error between the gradient of the fitting function and the gradient of the binarization function, and also compensates for the error between the gradient of the binarization function and the ideal gradient. In this way, a finally obtained gradient of the loss function with respect to the target weight is more accurate, and the training effect of the neural network is improved.

In an implementation, the series expansion of the binarization function is Fourier series expansion of the binarization function, wavelet series expansion of the binarization function, or discrete Fourier series expansion of the binarization function.

This implementation provides a plurality of feasible schemes for the series expansion of the binarization function.

A second aspect of embodiments of this application provides a neural network training method, including: performing, in a forward propagation process, binarization processing on an activation value of a second neural network layer by using a binarization function, to obtain an input of a first neural network layer. The first neural network layer and the second neural network layer belong to a same neural network. The binarization function is a function in which a dependent variable has only two values for different value ranges of an independent variable, and the binarization function has a plurality of types. For example, a target weight may be converted to +1 or -1, or the target weight may be converted to +1 and 0. The activation value is a value processed by using an activation function. The activation function is a function that runs on a neuron of the neural network, and is usually a nonlinear function. The activation function is used to map an input of the neuron to an output end, and the activation function includes but is not limited to a sigmoid function, a tanh function, and a ReLU function. The method further includes: calculating, in a backward propagation process, a gradient of a loss function with respect to the activation value by using a gradient of a fitting function as a gradient of the binarization function, where the fitting function is determined based on series expansion of the binarization function.

Forward propagation means that intermediate variables of all layers of the neural network are successively calculated according to an order of the neural network from an input layer to an output layer, where the intermediate variable may be an output value of each layer of the neural network. Backward propagation means that the intermediate variables of all the layers of the neural network and a derivative of the loss function with respect to each parameter are successively calculated according to an order of the neural network from the output layer to the input layer, where the intermediate variable may be the output value of each layer of the neural network.

In the forward propagation process, binarization processing is performed on the activation value of the second neural network layer by using the binarization function, to obtain the input of the first neural network layer in the neural network, thereby reducing storage space occupied by the first neural network layer. Because a weight obtained through binarization processing may be +1 or -1, or may be +1 or 0, a multiplication operation can be changed to an addition operation, and an operation amount can be reduced. In the backward propagation process, the gradient of the loss function with respect to the activation value is calculated by using the gradient of the fitting function as the gradient of the binarization function, to resolve a problem that backward propagation cannot be performed by using the gradient of the binarization function. In addition, the fitting function is determined based on the series expansion of the binarization function. Therefore, a fitting degree between the fitting function and the binarization function is higher, and fitting effect is better. Therefore, training effect of the neural network can be improved, and high accuracy of a trained neural network can be ensured.

In an implementation, a data type of the activation value is a 32-bit floating point type, a 64-bit floating point type, a 32-bit integer type, or an 8-bit integer type.

This implementation provides a plurality of possible data types of the activation value.

The fitting function includes a plurality of subfunctions, and the plurality of subfunctions are determined based on the series expansion of the binarization function.

The plurality of subfunctions are determined based on the series expansion of the binarization function, and the fitting function includes the plurality of subfunctions. Therefore, the fitting degree between the fitting function and the binarization function is high, and the training effect of the neural network can be improved.

The fitting function includes a plurality of subfunctions and an error function, the plurality of subfunctions are determined based on the series expansion of the binarization function, and the error function has a plurality of forms, and may be fitted by one or more neural network layers.

The error function is introduced into the fitting function. The error function can compensate for an error between the gradient of the fitting function and the gradient of the binarization function, and can also compensate for an error between the gradient of the binarization function and an ideal gradient. Therefore, impact of the error on the gradient of the fitting function is reduced, and accuracy of the gradient of the fitting function is improved.

The error function is fitted by a two-layer fully connected neural network with a residual. The two-layer fully connected neural network is a neural network in which any neuron in one neural network layer is connected to all neurons in the other neural network layer. The residual refers to a difference between an actual observation value and an estimated value (a value fitted by the neural network). Because the two-layer fully connected neural network with a residual is used to fit the error function, the two-layer fully connected neural network with a residual may also be referred to as an error fitting module.

The two-layer fully connected neural network may be considered as a part of the neural network in which the first neural network layer is located. If the two-layer fully connected neural network includes a third neural network layer and a fourth neural network layer, the error function may be expressed as e(x) = σ(x*W*₁)*W*₂ + *δ*(x), where *W*₁ indicates a weight of the third neural network layer in the neural network, *W*₂ indicates a weight of the fourth neural network layer in the neural network, σ(x*W*₁) indicates the activation function, *δ*(x) indicates a residual module, and x indicates the target weight. The residual module *δ*(x) has a plurality of forms. This is not specifically limited in this embodiment of this application. For example, the residual module may be 0, x, or sin(x).

This implementation provides a specific fitting manner of the error function.

The calculating, in a backward propagation process, a gradient of a loss function with respect to the activation value by using a gradient of a fitting function as a gradient of the binarization function includes: calculating, in the backward propagation process, gradients of the plurality of subfunctions with respect to the activation value; calculating a gradient of the two-layer fully connected neural network with a residual with respect to the activation value; and calculating the gradient of the loss function with respect to the activation value based on the gradients of the plurality of subfunctions with respect to the activation value and the gradient of the two-layer fully connected neural network with a residual with respect to the activation value. Specifically, a sum of the gradients of the plurality of subfunctions with respect to the activation value and the gradient of the two-layer fully connected neural network with a residual with respect to the activation value may be calculated first. Then, the sum is multiplied by a back-propagated gradient (that is, a gradient of the loss function with respect to an activation value of the first neural network layer), to obtain a gradient of the loss function with respect to the activation value of the second neural network layer.

In the backward propagation process, the gradients of the plurality of subfunctions with respect to the activation value and a gradient of the error function with respect to the activation value are calculated, and the gradient of the loss function with respect to the activation value is calculated based on the gradients of the plurality of subfunctions with respect to the activation value and the gradient of the error function with respect to the activation value. The gradient of the error function with respect to the activation value compensates for the error between the gradient of the fitting function and the gradient of the binarization function, and also compensates for the error between the gradient of the binarization function and the ideal gradient. In this way, a finally obtained gradient of the loss function with respect to the activation value is more accurate, and the training effect of the neural network is improved.

In an implementation, the series expansion of the binarization function is Fourier series expansion of the binarization function, wavelet series expansion of the binarization function, or discrete Fourier series expansion of the binarization function.

A third aspect of embodiments of this application provides a network structure of a neural network. The neural network includes a first neural network module, a second neural network module, and a first neural network layer. The first neural network module includes one or more neural network layers, and is configured to implement the binarization processing step in any possible implementation of the first aspect. The second neural network module includes one or more neural network layers, and is configured to implement the gradient calculation step in any possible implementation of the first aspect.

A fourth aspect of embodiments of this application provides a network structure of a neural network. The neural network includes a first neural network module, a second neural network module, and a first neural network layer. The first neural network module includes one or more neural network layers, and is configured to implement the binarization processing step in any possible implementation of the second aspect. The second neural network module includes one or more neural network layers, and is configured to implement the gradient calculation step in any possible implementation of the second aspect.

A fifth aspect of embodiments of this application provides a neural network training apparatus, including: a binarization processing unit, configured to perform, in a forward propagation process, binarization processing on a target weight by using a binarization function, to obtain a weight of a first neural network layer in a neural network, where the first neural network layer is a neural network layer in the neural network; and a gradient calculation unit, configured to calculate, in a backward propagation process, a gradient of a loss function with respect to the target weight by using a gradient of a fitting function as a gradient of the binarization function, where the fitting function is determined based on series expansion of the binarization function.

In an implementation, a data type of the target weight is a 32-bit floating point type, a 64-bit floating point type, a 32-bit integer type, or an 8-bit integer type.

The fitting function includes a plurality of subfunctions, and the plurality of subfunctions are determined based on the series expansion of the binarization function.

The fitting function includes a plurality of subfunctions and an error function, and the plurality of subfunctions are determined based on the series expansion of the binarization function.

The error function is fitted by a two-layer fully connected neural network with a residual.

The gradient calculation unit is specifically configured to: calculate, in the backward propagation process, gradients of the plurality of subfunctions with respect to the target weight; calculate a gradient of the at least one neural network layer with respect to the target weight; and calculate the gradient of the loss function with respect to the target weight based on the gradients of the plurality of subfunctions with respect to the target weight and the gradient of the at least one neural network layer with respect to the target weight.

In an implementation, the series expansion of the binarization function is Fourier series expansion of the binarization function, wavelet series expansion of the binarization function, or discrete Fourier series expansion of the binarization function.

For specific implementations, related descriptions, and technical effect of the foregoing units, refer to descriptions in the first aspect of embodiments of this application.

A sixth aspect of embodiments of this application provides a neural network training apparatus, including: a binarization processing unit, configured to perform, in a forward propagation process, binarization processing on an activation value of a second neural network layer by using a binarization function, to obtain an input of a first neural network layer, where the first neural network layer and the second neural network layer belong to a same neural network; and a gradient calculation unit, configured to calculate, in a backward propagation process, a gradient of a loss function with respect to the activation value by using a gradient of a fitting function as a gradient of the binarization function, where the fitting function is determined based on series expansion of the binarization function.

In an implementation, a data type of the activation value is a 32-bit floating point type, a 64-bit floating point type, a 32-bit integer type, or an 8-bit integer type.

The fitting function includes a plurality of subfunctions, and the plurality of subfunctions are determined based on the series expansion of the binarization function.

The fitting function includes a plurality of subfunctions and an error function, and the plurality of subfunctions are determined based on the series expansion of the binarization function.

The error function is fitted by a two-layer fully connected neural network with a residual.

The gradient calculation unit is specifically configured to: calculate, in the backward propagation process, gradients of the plurality of subfunctions with respect to the activation value; calculate a gradient of the at least one neural network layer with respect to the activation value; and calculate the gradient of the loss function with respect to the activation value based on the gradients of the plurality of subfunctions with respect to the activation value and the gradient of the at least one neural network layer with respect to the activation value.

In an implementation, the series expansion of the binarization function is Fourier series expansion of the binarization function, wavelet series expansion of the binarization function, or discrete Fourier series expansion of the binarization function.

For specific implementations, related descriptions, and technical effect of the foregoing units, refer to descriptions in the second aspect of embodiments of this application.

A seventh aspect of embodiments of this application provides a training device, including one or more processors and a memory. The memory stores computer-readable instructions. The one or more processors read the computer-readable instructions, so that the training device implements the method according to any implementation of the first aspect or the second aspect.

An eighth aspect of embodiments of this application provides a computer-readable storage medium, including computer-readable instructions. When the computer-readable instructions are run on a computer, the computer is enabled to perform the method according to any implementation of the first aspect or the second aspect.

A ninth aspect of embodiments of this application provides a chip, including one or more processors. A part or all of the processors are configured to read and execute a computer program stored in a memory, to perform the method according to any possible implementation of the first aspect or the second aspect.

Optionally, the chip further includes the memory, and the memory and the processor are connected through a circuit or a wire. Further optionally, the chip further includes a communication interface, and the processor is connected to the communication interface. The communication interface is configured to receive data and/or information that need to be processed. The processor obtains the data and/or information from the communication interface, processes the data and/or information, and outputs a processing result through the communication interface. The communication interface may be an input/output interface.

In some implementations, a part of the one or more processors may implement a part of steps in the foregoing method in a manner of dedicated hardware. For example, processing related to a neural network model may be implemented by a dedicated neural network processor or a graphics processing unit.

The method provided in embodiments of this application may be implemented by one chip, or may be cooperatively implemented by a plurality of chips.

A tenth aspect of embodiments of this application provides a computer program product. The computer program product includes computer software instructions, and the computer software instructions may be loaded by a processor to implement the method according to any implementation of the first aspect or the second aspect.

An eleventh aspect of embodiments of this application provides a server. The server may be a cloud server, and is configured to perform the method in any possible implementation of the first aspect or the second aspect.

A twelfth aspect of embodiments of this application provides a terminal device. A neural network trained by using the method in any implementation of the first aspect or the second aspect is deployed on the terminal device.

### BRIEF DESCRIPTION OF DRAWINGS

FIG. 1 is a schematic diagram of a calculation process of a neuron;
FIG. 2 is a schematic diagram of an embodiment in which gradient calculation is performed by using a straight through estimator;
FIG. 3 is a schematic diagram of a structure of an artificial intelligence main framework;
FIG. 4 is a schematic diagram of an application scenario according to an embodiment of this application;
FIG. 5 is a system architectural diagram of a task processing system according to an embodiment of this application;
FIG. 6 is a schematic diagram of an embodiment of a neural network training method according to an embodiment of this application;
FIG. 7 is a schematic diagram of comparison of fitting effect of a plurality of functions;
FIG. 8 is a schematic flowchart of calculating a gradient of a loss function with respect to a target weight;
FIG. 9 is a schematic diagram of an example of calculating a gradient of a loss function with respect to a target weight;
FIG. 10 is a schematic diagram of another embodiment of a neural network training method according to an embodiment of this application;
FIG. 11 is a schematic diagram of an embodiment of a neural network training apparatus according to an embodiment of this application;
FIG. 12 is a schematic diagram of another embodiment of a neural network training apparatus according to an embodiment of this application; and
FIG. 13 is a schematic diagram of an embodiment of a training device according to an embodiment of this application.

### DESCRIPTION OF EMBODIMENTS

Embodiments of this application provide a neural network training method and a related device, to determine a fitting function of a binarization function based on series expansion of the binarization function. A gradient of the binarization function is replaced with a gradient of the fitting function to perform backward propagation, to avoid low precision of a neural network caused because the gradient of the binarization function is ignored. Therefore, the precision of the neural network can be improved in embodiments of this application.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include" and "have" and any variations thereof are intended to cover non-exclusive inclusion, so that a process, method, system, product, or device that includes a series of units is not necessarily limited to those units, but may include other units not explicitly listed or inherent to such a process, method, system, product, or device.

Before embodiments of this application are described, a current neural network binarization technology and a related background are briefly described, to facilitate subsequent understanding of embodiments of this application.

In the field of deep learning, a neural network is widely used, and a central processing unit (CPU) cannot meet high concurrency and high computation amount requirements of various deep neural networks (for example, a convolutional neural network (CNN)). Although a graphics processing unit (GPU) can partially resolve a problem of high concurrency and a high computation amount, high power consumption and a high price limit application of the graphics processing unit on a mobile terminal (including a device-side device and an edge device). Generally, an enterprise-level or scientific research institute can purchase a high-end GPU for neural network training, testing, and application. At present, some mobile phone chips each have integrated a neural network processing unit (NPU), but how to achieve balance between power consumption and performance is still an urgent problem to be resolved.

There are two technical problems that limit application of the deep neural network on the mobile terminal: (1) an excessive computation amount; and (2) an excessive quantity of parameters of the neural network. The CNN is used as an example. A computation amount of a convolution operation is huge. For a convolution kernel that contains hundreds of thousands of parameters, a quantity of floating point operations (FLOPs) of the convolution operation may be tens of millions. An existing common CNN with n layers has a total computation amount of billions of FLOPs, and a CNN that can perform a real-time operation on a GPU is very slow on a mobile terminal. When a computing resource of the mobile terminal cannot meet the real-time operation of the existing CNN, it is necessary to consider how to reduce a convolution computation amount. In addition, in a currently commonly used CNN, a quantity of parameters of each convolutional layer can reach tens of thousands, hundreds of thousands, or even more, and a total quantity of parameters of an entire network with n layers can reach tens of millions, and each parameter is represented by a 32-bit floating point number. In this way, hundreds of megabytes of memory or cache is required to store these parameters. However, in the mobile terminal, memory and cache resources are very limited. How to reduce a quantity of parameters of the convolutional layer to enable the CNN to adapt to a related device of the mobile terminal is also an urgent problem to be resolved. In this context, a binary neural network (BNN) emerges.

Currently, a commonly used BNN performs binarization processing on a weight and an activation value of a neural network on the basis of an existing neural network. To be specific, each of a value of each weight in a weight matrix of each layer of the original neural network and an activation value of each layer of the neural network is assigned to one of +1 and -1, or to one of +1 and 0. The BNN does not change a network structure of the original neural network, but mainly optimizes gradient descent, weight update, and a convolution operation. Obviously, binarization processing on the weight of the neural network reduces storage space occupied by the weight, and changes a complex multiplication operation to an addition/subtraction operation, thereby reducing an operation amount and improving an operation speed. Similarly, binarization processing is performed on the activation value of the neural network, which can also reduce an operation amount and improve an operation speed.

The activation value is a value processed by using an activation function. The activation function is a function that runs on a neuron of the neural network, is usually a nonlinear function, and is used to map an input of the neuron to an output end. The activation function includes but is not limited to, a sigmoid function, a tanh function, and a ReLU function.

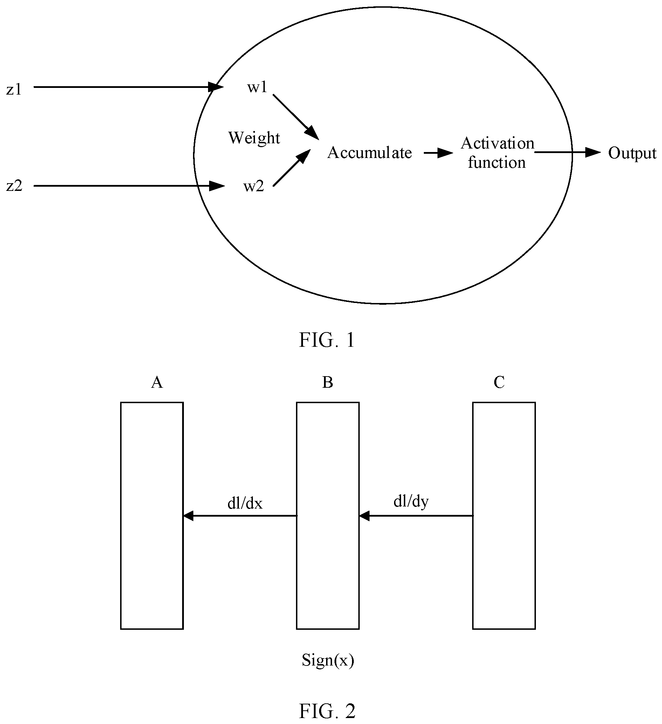

The following describes the activation function and the activation value by using a specific example. As shown in FIG. 1, z1 and z2 are input to a neuron, and an operation of w1*z1+w2*z2 is performed on the neuron, where w1 and w2 are weights. Then, a linear value of w1*z1+w2*z2 may be converted into a nonlinear value by using the activation function. The nonlinear value is an output of the neuron, and may also be referred to as an activation value of the neuron.

It can be learned based on the foregoing descriptions that, if the activation function is not used, an output of each neural network layer is a linear function of an input, and no matter how many layers the neural network has, outputs are all linear combinations of inputs. This case is a primitive perceptron. If the activation function is used, the activation function introduces a nonlinear factor to the neuron, so that the neural network can approach any nonlinear function arbitrarily, and the neural network can be applied to many nonlinear models.

Currently, there are mainly two methods of performing binarization. The first method is a deterministic method based on a sign function (also referred to as a Sign function), and the second method is a random method (also referred to as a statistical method). Theoretically, the second method is more reasonable. However, in practice, a random number needs to be generated by hardware, and this is difficult. Therefore, in actual application, the second method has not been applied currently, and the first method is used, to be specific, binarization processing is performed by using the Sign function.

A formula for the sign function is as follows: ${W}^{b} = Sign \left(W\right) = \left\{\begin{matrix}+ 1 & W > 0 \\ - 1 & W \leq 0\end{matrix}\right.$, where *W* is a weight of each network layer in the neural network, and *W^{b}* is a weight obtained through binarization.

It can be learned from the formula that a gradient of the Sign function is an impulse function, in other words, a gradient at a position 0 is infinite, and gradients at other positions are 0.

A training process of the neural network includes two processes: forward propagation and backward propagation. The forward propagation means that intermediate variables of all layers of the neural network are successively calculated according to an order of the neural network from an input layer to an output layer, where the intermediate variable may be an output value of each layer of the neural network. The backward propagation means that the intermediate variables of all the layers of the neural network and a derivative of the loss function with respect to each parameter are successively calculated according to an order of the neural network from the output layer to the input layer, where the intermediate variable may be the output value of each layer of the neural network.

The loss function may also be referred to as a cost function, and is a function that maps a value of a random event or a value of a related random variable of the random event to a nonnegative real number to represent a "risk" or a "loss" of the random event.

The gradient of the Sign function at the position 0 is infinite, and the gradients at the other positions are 0. Therefore, the gradient of the Sign function cannot be used for the backward propagation. Although a straight through estimator (STE) can resolve a problem that the gradient of the Sign function cannot be used for the backward propagation, but the straight through estimator also brings another problem. Specifically, if the straight through estimator is used for the backward propagation, the gradient of the Sign function (may also be understood that the gradient of the Sign function is considered as 1) is not calculated in a backward propagation process. Obviously, in this manner, the gradient of the Sign function is ignored, and a trained neural network is not accurate enough.

The following further describes the straight through estimator with reference to FIG. 2.

FIG. 2 shows three neural network layers that are A, B, and C. The neural network layer B is used to fit the Sign function. In the backward propagation process, a gradient dl/dx needs to be calculated by using a gradient dl/dy back-propagated by the neural network layer C, and the gradient dl/dx needs to be back-propagated to the neural network layer A. dl/dy indicates a gradient of the loss function with respect to an output y of the neural network layer B, dl/dx indicates a gradient of the loss function with respect to an input x of the neural network layer B, and y=Sign(x). The gradient of Sign(x) at the position 0 is infinite, and the gradients at the other positions are 0. Therefore, the straight through estimator is used for the backward propagation. In this example, if the straight through estimator is used, the gradient of Sign(x) is not calculated (it may also be considered that the gradient of Sign(x) is considered as 1), and the gradient dl/dy is directly back-propagated to the neural network layer A. That is, dl/dy is considered to be equal to dl/dx.

It can be obviously learned from the example in FIG. 2 that if the gradient of Sign(x) is not calculated, the back-propagated gradient of is inaccurate, and further, accuracy of the trained neural network is low.

Therefore, an embodiment of this application provides a neural network training method. In the method, a derivative fitting function is used to replace a binarization function (a Sign function is a binarization function) in a backward propagation process, so that a gradient of a loss function can be calculated by using a derivative of the fitting function, to improve accuracy of a trained neural network. In addition, the fitting function is determined based on series expansion of the binarization function. In other words, the fitting function in this embodiment of this application is determined based on a mathematical theory. Compared with fitting the binarization function by using only one fixed function, the fitting function used in this embodiment of this application has a higher similarity to the Sign function, so that a fitting error can be reduced and fitting effect can be improved, thereby improving accuracy of the trained neural network.

The following describes technical solutions in embodiments of the present invention with reference to accompanying drawings in embodiments of the present invention. It is clear that the described embodiments are merely a part rather than all of embodiments of the present invention.

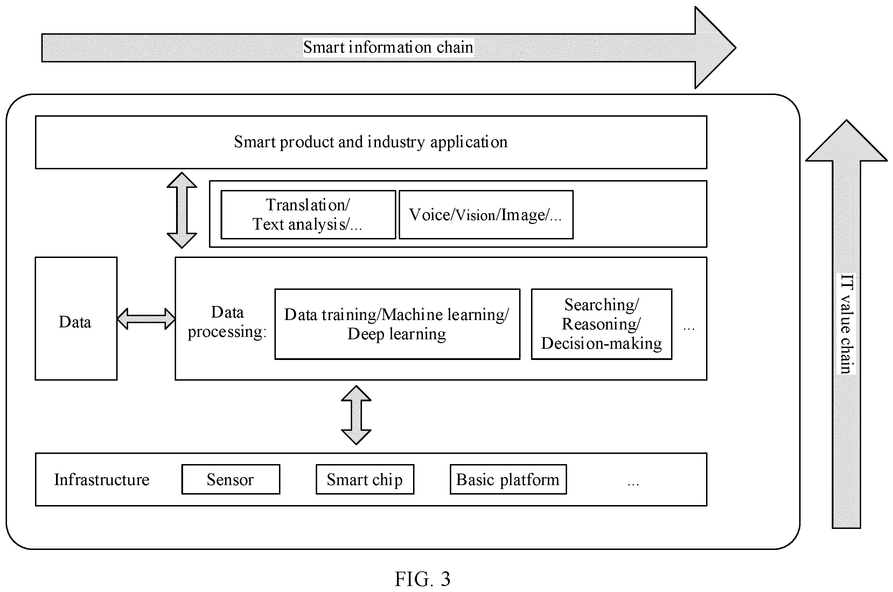

An overall working procedure of an artificial intelligence system is first described. FIG. 3 is a schematic diagram of a structure of an artificial intelligence main framework. The following describes the artificial intelligence main framework from two dimensions: an "intelligent information chain" (a horizontal axis) and an "IT value chain" (a vertical axis).

The "intelligent information chain" reflects a process from obtaining data to processing the data. For example, the process may be a general process including intelligent information perception, intelligent information representation and formation, intelligent inference, intelligent decision-making, and intelligent execution and output. In this process, the data undergoes a refinement process of "data-information-knowledge-intelligence".

The "IT value chain", from underlying infrastructure and information (provision and processing of technical realizations) of artificial intelligence to a system's industry ecosystem, reflects the value that artificial intelligence contributes to the information technology industry.

### (1) Infrastructure

The infrastructure provides computing capability support for the artificial intelligence system, implements communication with the external world, and implements support by using basic platforms. The infrastructure communicates with the outside by using sensors. A computing capability is provided by smart chips (hardware acceleration chips such as a CPU, an NPU, a GPU, an ASIC, and an FPGA). The basic platforms include related platforms, for example, a distributed computing framework and network, for assurance and support. The basic platforms may include a cloud storage and computing network, an interconnection network, and the like. For example, the sensor communicates with the outside to obtain data, and the data is provided to a smart chip for computing, where the smart chip is in a distributed computing system provided by the basic platforms.

### (2) Data

Data at an upper layer of the infrastructure indicates a data source in the artificial intelligence field. The data relates to a graph, an image, speech, and text, and further relates to internet of things data of a conventional device. The internet of things data of the conventional device includes service data of an existing system, and perception data such as force, displacement, a liquid level, a temperature, and humidity.

### (3) Data processing

Data processing usually includes a manner such as data training, machine learning, deep learning, searching, inference, or decision-making.

Machine learning and deep learning may be used to perform symbolic and formal intelligent information modeling, extraction, preprocessing, training, and the like on data.

Inference is a process of simulating a human intelligent inference manner and performing machine thinking and problem resolving with formal information according to an inference control policy in a computer or an intelligent system. A typical function is searching and matching.

Decision-making is a process of making a decision after intelligent information is inferred, and usually provides functions such as classification, ranking, and prediction.

### (4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

### (5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

Embodiments of this application may be applied to an optimized design of a network structure of a neural network, and a neural network trained by using this application is used for image classification, image segmentation, target detection, and super-resolution image reconstruction.

FIG. 3 is used as an example. In this embodiment of this application, data in a data set obtained by the infrastructure may be a plurality of different types of data (also referred to as training data, and a plurality of pieces of training data form a training set) obtained by using sensors such as a camera and a radar, may be a plurality of pieces of image data or a plurality of pieces of video data, or may be data such as speech and text, provided that the training set is used to perform iterative training on the neural network and can be used to implement training of the neural network in this application. A type of the data in the training set is not specifically limited herein.

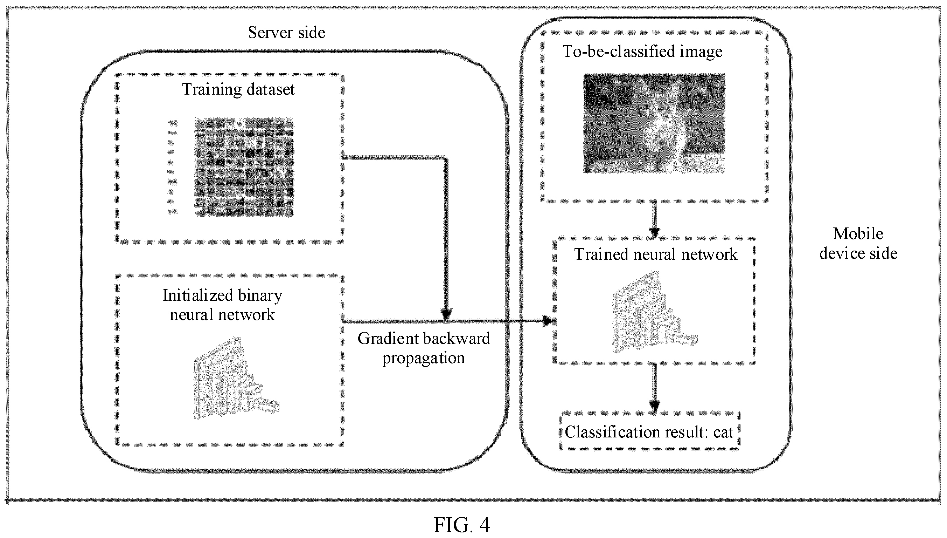

The following describes a specific application scenario of an embodiment of this application with reference to FIG. 4.

As shown in FIG. 4, on a server side, an initialized binary neural network is trained by using a training dataset, and a training process includes a gradient backward propagation process. A trained neural network is deployed on a mobile device side, and the neural network may be used on the mobile device side for image classification. Specifically, as shown in FIG. 4, a to-be-classified image is an image of a cat. The to-be-classified image is classified by using the trained neural network, and a classification result is the cat.

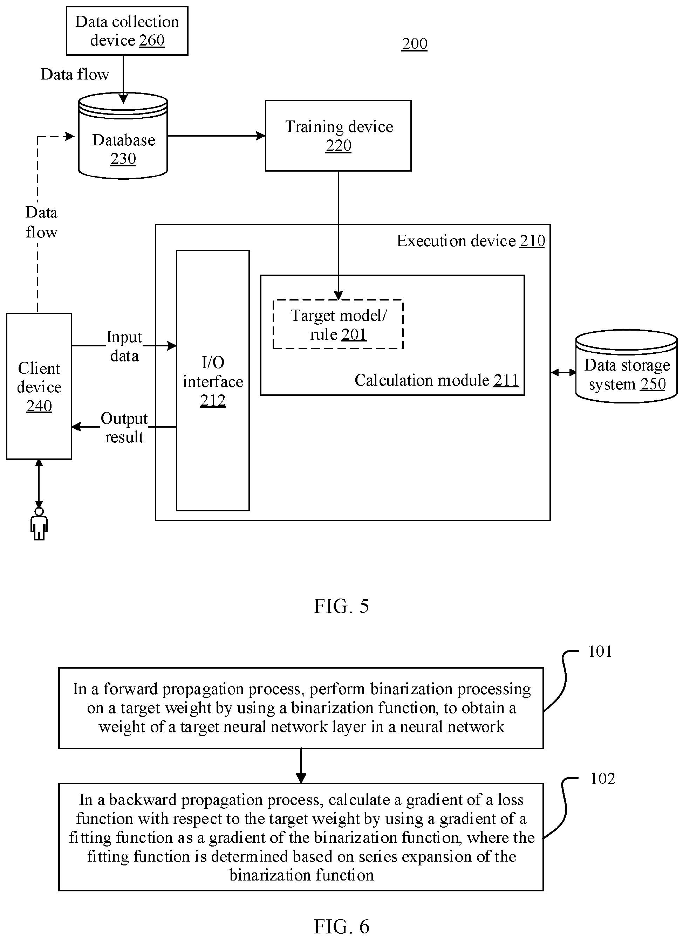

FIG. 5 is a system architectural diagram of a task processing system according to an embodiment of this application. In FIG. 5, a task processing system 200 includes an execution device 210, a training device 220, a database 230, a client device 240, a data storage system 250, and a data collection device 260. The execution device 210 includes a calculation module 211. The data collection device 260 is configured to obtain an open-source large-scale data set (that is, a training set) required by a user, and store the training set into the database 230. The training device 220 trains a target model/rule 201 based on the maintained training set in the database 230. A trained neural network is then used on the execution device 210. The execution device 210 may invoke data, code, and the like in the data storage system 250, and may further store data, instructions, and the like in the data storage system 250. The data storage system 250 may be disposed in the execution device 210, or the data storage system 250 may be an external memory relative to the execution device 210.

The trained neural network obtained after the target model/rule 201 is trained by the training device 220 may be applied to different systems or devices (that is, the execution device 210), and may be specifically an edge device or a terminal-side device, for example, a mobile phone, a tablet, a notebook computer, a monitoring system (for example, a camera), or a security system. In FIG. 5, an I/O interface 212 is configured for the execution device 210, to exchange data with an external device. The "user" may input data to the I/O interface 212 by using the client device 240. For example, the client device 240 may be a camera device of the monitoring system. A target image photographed by using the camera device is input to the calculation module 211 of the execution device 210 as input data. The calculation module 211 detects the input target image, to obtain a detection result. Then, the detection result is output to the camera device, or is directly displayed on a display interface (if exists) of the execution device 210. In addition, in some implementations of this application, the client device 240 may alternatively be integrated into the execution device 210. For example, when the execution device 210 is a mobile phone, a target task may be directly obtained by using the mobile phone (for example, a target image may be photographed by a camera of the mobile phone, or target voice may be recorded by a recording module of the mobile phone, and the target task is not limited herein), or a target task sent by another device (for example, another mobile phone) may be received. Then, a calculation module in the mobile phone detects the target task, to obtain a detection result, and the detection result is directly presented on a display interface of the mobile phone. Product forms of the execution device 210 and the client device 240 are not limited herein.

It should be noted that FIG. 5 is merely a schematic diagram of a system architecture according to this embodiment of this application, and a location relationship between devices, components, modules, and the like shown in the figure does not constitute any limitation. For example, in FIG. 5, the data storage system 250 is an external memory relative to the execution device 210. In another case, the data storage system 250 may alternatively be disposed in the execution device 210. In FIG. 5, the client device 240 is a peripheral device relative to the execution device 210. In another case, the client device 240 may alternatively be integrated into the execution device 210.

The following describes the neural network training method provided in embodiments of this application.

For ease of understanding, a training process of a binary neural network is first described herein. The training process of the binary neural network is as follows:

It is assumed that a binary neural network corresponding to a convolutional neural network needs to be trained. In this case, an initial neural network whose topology structure is the same as that of the convolutional neural network needs to be constructed first, and then binarization processing is performed on a weight of each neural network layer of the convolutional neural network. A weight of each neural network layer obtained through binarization processing is input to the initial neural network, and the initial neural network is trained by using the weight of each neural network layer obtained through binarization processing. In a training process, a weight of the initial neural network is updated through a plurality of iterative computation times. Each iterative computation time includes one forward propagation process and one back propagation process, and the weight of the initial neural network may be updated by using a gradient of the back propagation.

It should be noted that, in the training process, the weight of each neural network layer of the convolutional neural network needs to be retained, and in each backward propagation process, the weight of each neural network layer of the convolutional neural network is updated. After the training is completed, binarization processing is performed again on the weight of each neural network layer of the convolutional neural network, and a weight of each neural network layer obtained through the binarization processing is used as the weight of each neural network layer of the initial neural network, to obtain the binary neural network.

In the foregoing process, binarization processing is performed on only a weight of the convolutional neural network. To obtain a more thorough binary neural network, binarization processing may be further performed on an activation value of each neural network layer in the training process, so that an input of each neural network layer is binarized.

In this embodiment of this application, binarization processing may be performed on only the weight of the convolutional neural network, binarization processing may be performed on only the activation value of the convolutional neural network, and binarization processing may be performed on both the weight of the convolutional neural network and the activation value of the convolutional neural network. Based on this, the following describes the training process of the neural network by using two embodiments. In a training process in one embodiment, binarization processing is performed on the weight of the neural network. In a training process in the other embodiment, binarization processing is performed on the activation value of the neural network.

The following first describes the training process of performing binarization processing on the weight of the neural network.

Specifically, refer to FIG. 6. An embodiment of this application provides an embodiment of a neural network training method. This embodiment includes the following steps.

Operation 101: In a forward propagation process, perform binarization processing on a target weight by using a binarization function, to obtain a weight of a first neural network layer in a neural network, where the first neural network layer is a neural network layer in the neural network.

The binarization function is a function in which a dependent variable has only two values for different value ranges of an independent variable. The binarization function has a plurality of types. This is not specifically limited in this embodiment of this application. For example, a binarization function is used as an example. When an independent variable is greater than 0, a value of the binarization function is +1, and when the independent variable is less than or equal to 0, the value of the binarization function is -1. Another binarization function is used as an example. When an independent variable is greater than 0, a value of the binarization function is +1, and when the independent variable is less than or equal to 0, the value of the binarization function is 0.

The target weight may be a weight of a neural network layer that corresponds to the first neural network layer and that is in a to-be-compressed neural network. Specifically, it can be learned based on the foregoing training process of the binary neural network that, to compress a convolutional neural network, a target neural network whose topology structure is the same as that of the convolutional neural network needs to be constructed first. Each neural network layer in the convolutional neural network corresponds to one neural network layer in the target neural network. Therefore, there is one neural network layer that corresponds to the first neural network layer and that is in the convolutional neural network, and a weight of the neural network layer that corresponds to the first neural network layer and that is in the convolutional neural network is the target weight.

The first neural network layer may be any neural network layer in the neural network. This is not specifically limited in this embodiment of this application.

It may be understood that the neural network includes an input layer, a hidden layer (may also be referred to as an intermediate layer), and an output layer. The input layer is used to input data, the hidden layer is used to process the input data, and the output layer is used to output a processing result of the data. The first neural network layer is usually a hidden layer to avoid a change of the input data caused by a change of a weight of the input layer, and to avoid a change of the output processing result caused by a change of a weight of the output layer.

For the convolutional neural network, a convolutional layer (belonging to the hidden layer) includes many convolution operators, and the convolution operator may also be referred to as a kernel. A quantity of parameters of each convolutional layer can usually reach tens of thousands, hundreds of thousands, or even more. Therefore, it is necessary to perform binarization processing on a weight of the convolutional layer. Therefore, when the neural network is a convolutional neural network, the first neural network layer may be specifically a convolutional layer.

An objective of performing binarization processing on the target weight is to reduce storage space occupied by the target weight. Therefore, regardless of a data type of the target weight, the storage space occupied by the target weight is greater than storage space occupied by the weight of the first neural network layer.

For example, the data type of the target weight may be a 32-bit floating point type, a 64-bit floating point type, a 32-bit integer type, or an 8-bit integer type.

Operation 102: In a backward propagation process, calculate a gradient of a loss function with respect to the target weight by using a gradient of a fitting function as a gradient of the binarization function, where the fitting function is determined based on series expansion of the binarization function.

The gradient of the binarization function is unavailable. Therefore, in this embodiment of this application, the fitting function is used to replace the binarization function in the backward propagation process, to be specific, the gradient of the loss function with respect to the target weight is calculated by using the gradient of the fitting function as the gradient of the binarization function.

FIG. 2 is used as an example. If the gradient of the fitting function is the gradient of the binarization function, gradient dl/dx=the gradient of the fitting function*gradient dl/dy.

It should be noted that there are a plurality of methods for determining the fitting function. One of the methods is to use a fixed function to fit the binarization function. However, the fixed function differs greatly from the binarization function, so a fitting error is large and fitting effect is poor. Therefore, in this embodiment of this application, the fitting function is determined based on the series expansion of the binarization function. A fitting function determined in this manner has a good fitting degree between the fitting function and the binarization function, and a fitting error is small.

The following describes in detail a process of determining the fitting function based on the series expansion of the binarization function.

It can be understood that, for any periodic function, series expansion may be performed. In addition, there are a plurality of types of series expansion. Therefore, there may also be a plurality of types of series expansion of the binarization function. This is not specifically limited in this embodiment of this application.

For example, the series expansion of the binarization function is Fourier series expansion of the binarization function, wavelet series expansion of the binarization function, or discrete Fourier series expansion of the binarization function.

The Fourier series expansion is used as an example, and any periodic function can be expanded into Fourier series $f \left(t\right) = \frac{{a}_{0}}{2} + {\sum }_{i = 1}^{∞} \left[{a}_{i} cos\left(iwt\right)+{b}_{i} sin\left(iwt\right)\right]$. Therefore, the binarization function may also be expanded into the Fourier series, where *t* indicates an independent variable, *a*₀ indicates a constant, *aᵢ* = 0, *i* is a positive integer, and ${b}_{i} = \left\{\begin{matrix}\frac{4}{iπ} & i > 0 \\ 0 & i \leq 0\end{matrix}\right.$ .

The Fourier series is formed by a sine function and a cosine function, so the binarization function may be fitted through superposition of infinite sine functions, namely, $sign \left(t\right) = \frac{4}{π} {\sum }_{i = 0}^{∞} \frac{sin \left(\left(2i+1\right)wt\right)}{2 i + 1}$ . However, actually, superposition of the infinite sine functions cannot be implemented, and only superposition of finite sine functions can be used to fit the binarization function, namely, $sign \left(t\right) = \frac{4}{π} {\sum }_{i = 0}^{n} \frac{sin \left(\left(2i+1\right)wt\right)}{2 i + 1}$, where *n* is a nonnegative integer, and a value of n may be set based on an actual requirement. This is not specifically limited in this embodiment of this application.

It should be noted that, in the neural network, the fitting function is fitted by at least one neural network layer, in other words, functions of one or more neural network layers are equivalent to the fitting function. However, in the foregoing example, the fitting function is formed by superposing a plurality of sine functions. Therefore, the at least one neural network layer may be referred to as a sine module.

The following uses a specific example to explain that the fitting function in this embodiment of this application has better fitting effect than another fixed function. In this example, the binarization function is a Sign(x) function.

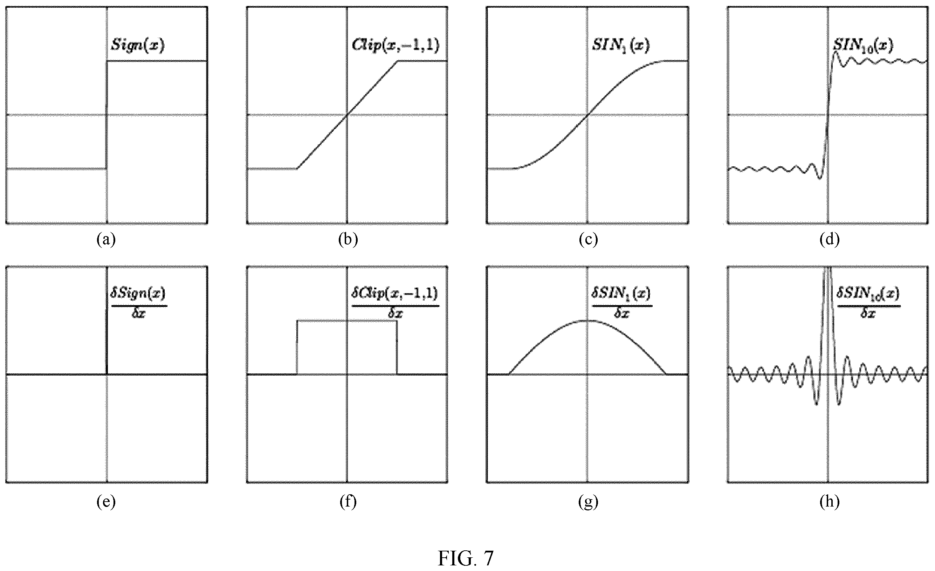

Specifically, as shown in FIG. 7, a graph (a) indicates the Sign(x) function, and a graph (e) indicates a gradient of the Sign(x) function. A graph (b) indicates a Clip (x, -1, +1) function, and a graph (f) indicates a gradient of the Clip (x, -1, +1) function. A graph (c) indicates a sine function SIN1(x), and a graph (g) indicates a gradient of the sine function SIN1(x). A graph (d) indicates a fitting function SIN10(x) obtained by superposing 10 sine functions in this embodiment of this application, and a graph (h) indicates a gradient of the fitting function SIN10(x) in this embodiment of this application.

The Clip (x, -1, +1) function is a function used by a straight through estimator to replace a Sign function.

The fitting function SIN10(x) is more similar to the Sign(x) function by comparing the curve (a), the curve (b), the curve (c), and the curve (d). A derivative of the fitting function SIN10(x) at 0 is closer to a derivative of the Sign(x) function at 0 by comparing the curve (e), the curve (f), the curve (c), and the curve (d).

It can be seen from the curve (f) that a gradient of the Clip (x, -1, +1) function outside a range of -1 to 1 is 0, and a gradient within the range of -1 to 1 is 1. This is equivalent to directly back-propagating a gradient of a previous neural network layer. Therefore, a training result of the neural network is poor, and accuracy of a trained neural network is low. However, the gradient of the fitting function in this embodiment of this application is close to the gradient of the Sign function. Therefore, backward propagation is performed by using the gradient of the fitting function, so that good training effect can be ensured, and accuracy of the trained neural network is high.

In this embodiment of this application, in the forward propagation process, binarization processing is performed on the target weight by using the binarization function, to obtain the weight of the first neural network layer in the neural network. In the backward propagation process, the gradient of the loss function with respect to the target weight is calculated by using the gradient of the fitting function as the gradient of the binarization function, to resolve a problem that backward propagation cannot be performed by using the gradient of the binarization function. In addition, the fitting function is determined based on the series expansion of the binarization function. Therefore, a fitting degree between the fitting function and the binarization function is higher, and fitting effect is better. Therefore, training effect of the neural network can be improved, and high accuracy of the trained neural network can be ensured.

It can be learned from the foregoing descriptions that the fitting function is determined based on the series expansion of the binarization function. Under this premise, the fitting function may have a plurality of forms.

In an implementation, the fitting function includes a plurality of subfunctions, and the plurality of subfunctions are determined based on the series expansion of the binarization function.

It may be understood that the series expansion of the binarization function includes an infinite quantity of functions, and the plurality of subfunctions are a part of the infinite quantity of functions. The Fourier series expansion is used as an example. The series expansion of the binarization function includes an infinite quantity of sine functions, and the plurality of subfunctions are a part of the sine functions, that is, the fitting function is formed through superposition of a plurality of sine functions.

In this embodiment of this application, the plurality of subfunctions are determined based on the series expansion of the binarization function, and the plurality of subfunctions form the fitting function. In this way, the fitting degree between the fitting function and the binarization function is high, and the fitting effect is improved.

It should be understood that although the fitting degree between the fitting function determined based on the series expansion of the binarization function and the binarization function is high, an error still exists between the gradient of the fitting function determined based on the series expansion of the binarization function and the gradient of the binarization function.

There are two reasons that cause the error.

For one aspect, the series expansion of the binarization function includes the infinite quantity of functions, and in this embodiment of this application, the fitting function is obtained by fitting the plurality of subfunctions (in other words, a finite quantity of subfunctions). Therefore, there is an error between the fitting function and the binarization function. As a result, there is still the error between the gradient of the fitting function determined based on the series expansion of the binarization function and the gradient of the binarization function.

For the other aspect, the Sign function is used as an example. The Sign function is an impulse function, and the gradient of the Sign function cannot be used for backward propagation. Therefore, the gradient of the Sign function is not an ideal gradient. Even if the fitting function can better fit the Sign function, the gradient of the fitting function is not an ideal gradient. Actually, there is an unknown ideal gradient (which may also be understood as an optimal gradient), which can guide training of the neural network well. Therefore, there is an error between the gradient of the Sign function and the ideal gradient, in other words, there is an error between the gradient of the binarization function and the ideal gradient, it may also be understood that the gradient of the binarization function is equal to a sum of the ideal gradient and a noise gradient, and the fitting function is used to fit the binarization function. Therefore, there is also an error between the gradient of the fitting function and the ideal gradient.

Therefore, in this embodiment of this application, an error function is introduced into the fitting function, to reduce impact of an error on the gradient of the fitting function, and improve accuracy of the gradient of the fitting function.

In an implementation, the fitting function includes a plurality of subfunctions and an error function, and the plurality of subfunctions are determined based on the series expansion of the binarization function.

In this embodiment of this application, the error function is added to the fitting function, in other words, the fitting function includes the plurality of subfunctions and the error function. For related descriptions of the plurality of subfunctions, refer to the foregoing embodiment for understanding.

The error function has a plurality of forms. This is not specifically limited in this embodiment of this application.

It should be noted that the error function may be fitted by at least one neural network layer. In a process of training the neural network, the at least one neural network layer used to fit the error function may be trained, so that the error function fitted by the at least one neural network layer is as accurate as possible, to reduce an error.

For example, the error function is fitted by a two-layer fully connected neural network with a residual.

The two-layer fully connected neural network is a neural network in which any neuron in one neural network layer is connected to all neurons in the other neural network layer. The residual refers to a difference between an actual observation value and an estimated value (a value fitted by the neural network).

Theoretically, the two-layer fully connected neural network may fit any function. Therefore, in this embodiment of this application, the two-layer fully connected neural network is used to fit the error function.

It may be understood that the two-layer fully connected neural network with a residual is used to fit the error function. Therefore, the two-layer fully connected neural network with a residual may also be referred to as an error fitting module.

The two-layer fully connected neural network may be considered as a part of the neural network in which the first neural network layer is located. If the two-layer fully connected neural network includes a third neural network layer and a fourth neural network layer, the error function may be expressed as e(x) = σ(x*W*₁)*W*₂ + *δ*(x), where *W*₁ indicates a weight of the third neural network layer in the neural network, *W*₂ indicates a weight of the fourth neural network layer in the neural network, σ(x*W*₁) indicates an activation function, *δ*(x) indicates a residual module, and x indicates the target weight.

The residual module has a plurality of forms. This is not specifically limited in this embodiment of this application. For example, the residual module may be 0, x, or sin(x).

In this embodiment of this application, the fitting function includes the plurality of subfunctions and the error function, and the plurality of subfunctions are determined based on the series expansion of the binarization function, so that the fitting function and the binarization function have a good fitting degree. The error function can reduce the error between the fitting function and the binarization function, and reduce an error between the gradient of the fitting function and a theoretical gradient, thereby improving the training result of the neural network.

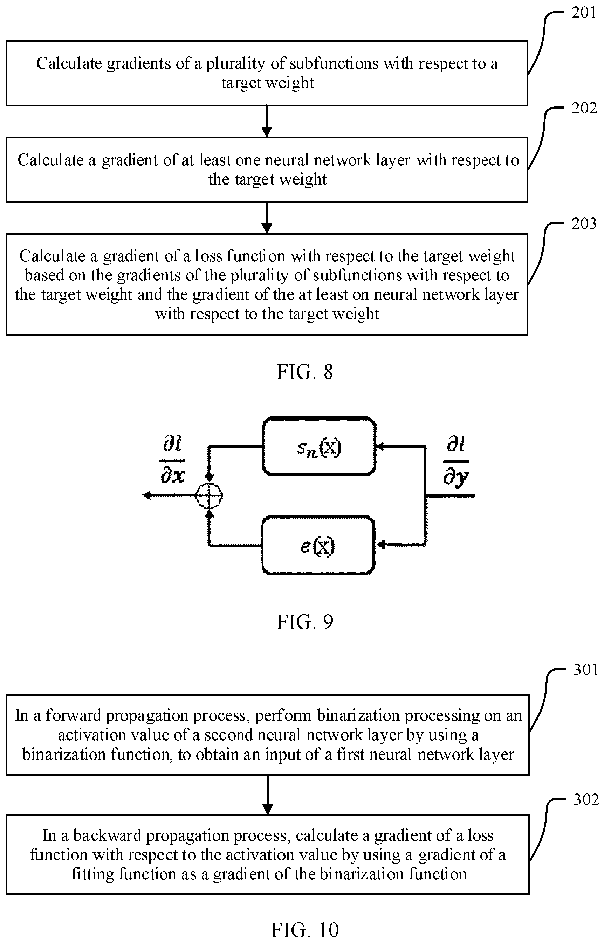

In an implementation, when the fitting function includes the plurality of subfunctions and the error function, and the error function is fitted by the at least one neural network layer, as shown in FIG. 8, the operation 102 includes the following operations.

Operation 201: In the backward propagation process, calculate gradients of the plurality of subfunctions with respect to the target weight.

Operation 202: Calculate a gradient of the at least one neural network layer with respect to the target weight.

Operation 203: Calculate the gradient of the loss function with respect to the target weight based on the gradients of the plurality of subfunctions with respect to the target weight and the gradient of the at least one neural network layer with respect to the target weight.

Specifically, a sum of the gradients of the plurality of subfunctions with respect to the target weight and the gradient of the at least one neural network layer with respect to the target weight may be first calculated, and then the sum is multiplied by a gradient of the loss function with respect to the weight of the first neural network layer, to obtain the gradient of the loss function with respect to the target weight.

The following describes the foregoing process with reference to FIG. 9. Because the at least one neural network layer is used to fit the error function, the error function is used to replace the at least one neural network layer for description in an example in FIG. 9.

As shown in FIG. 9, Sₙ(x) indicates the plurality of subfunctions, and e(x) indicates the error function. First, a gradient $\frac{\partial l}{\partial y}$ of a loss function back-propagated by a previous neural network layer with respect to the weight of the first neural network layer is obtained, then gradients of the plurality of subfunctions Sₙ(x) with respect to the target weight are calculated, and the gradient of the error function e(x) with respect to the target weight is calculated. Finally, the gradient $\frac{\partial l}{\partial x}$ of the loss function with respect to the target weight is calculated based on the gradient $\frac{\partial l}{\partial y}$, the gradients of Sₙ(x) with respect to the target weight, and the gradient of e(x) with respect to the target weight. Specifically, the sum of the gradients of the Sₙ(x) with respect to the target weight and the gradient of e(x) with respect to the target weight may be calculated first, and then the sum is multiplied by the gradient $\frac{\partial l}{\partial y}$, to obtain the gradient $\frac{\partial l}{\partial x}$ of the loss function with respect to the target weight.

In the backward propagation process, the gradients of the plurality of subfunctions with respect to the target weight and the gradient of the at least one neural network layer with respect to the target weight are calculated, and the gradient of the loss function with respect to the target weight is calculated based on the gradients of the plurality of subfunctions with respect to the target weight and the gradient of the at least one neural network layer with respect to the target weight. Because the at least one neural network layer is used to fit the error function, the gradient of the at least one neural network layer with respect to the target weight compensates for the error between the gradient of the fitting function and the gradient of the binarization function, and also compensates for the error between the gradient of the binarization function and the ideal gradient. In this way, a finally obtained gradient of the loss function with respect to the target weight is more accurate, and the training effect of the neural network is improved.

The foregoing describes the training process of performing binarization processing on the weight of the neural network, and the following describes a training process of performing binarization processing on the activation value of the neural network.

As shown in FIG. 10, an embodiment of this application further provides a neural network training method. This embodiment includes the following steps.

Operation 301: In a forward propagation process, perform binarization processing on an activation value of a second neural network layer by using a binarization function, to obtain an input of a first neural network layer, where the first neural network layer and the second neural network layer belong to a same neural network.

It may be understood that the second neural network layer and the first neural network layer are two connected neural network layers, and the activation value of the second neural network layer (in other words, an output of the second neural network layer) is the input of the first neural network layer. In this embodiment of this application, binarization processing is performed on the activation value of the second neural network layer by using the binarization function, so that a value input to the first neural network layer is a value obtained through binarization processing.

Because the activation value has been described above, the activation value in this embodiment may be understood with reference to the foregoing descriptions.

Operation 302: In a backward propagation process, calculate a gradient of a loss function with respect to the activation value by using a gradient of a fitting function as a gradient of the binarization function, where the fitting function is determined based on series expansion of the binarization function.

In an implementation, a data type of the activation value is a 32-bit floating point type, a 64-bit floating point type, a 32-bit integer type, or an 8-bit integer type.

In an implementation, the fitting function includes a plurality of subfunctions, and the plurality of subfunctions are determined based on the series expansion of the binarization function.

In an implementation, the fitting function includes a plurality of subfunctions and an error function, and the plurality of subfunctions are determined based on the series expansion of the binarization function.

In an implementation, the error function is fitted by a two-layer fully connected neural network with a residual.

In an implementation, when the fitting function includes the plurality of subfunctions and the error function, the error function is fitted by at least one neural network layer, and the operation 302 includes:
calculating, in the backward propagation process, gradients of the plurality of subfunctions with respect to the activation value;
calculating a gradient of the at least one neural network layer with respect to the activation value; and
calculating the gradient of the loss function with respect to the activation value based on the gradients of the plurality of subfunctions with respect to the activation value and the gradient of the at least one neural network layer with respect to the activation value.

In an implementation, the series expansion of the binarization function is Fourier series expansion of the binarization function, wavelet series expansion of the binarization function, or discrete Fourier series expansion of the binarization function.

It should be noted that, the embodiment shown in FIG. 7 differs from the embodiment shown in FIG. 10 in a processing object. Specifically, in the embodiment shown in FIG. 10, binarization processing is performed on the activation value of the second neural network layer in the forward propagation process, and the gradient of the loss function with respect to the activation value is calculated in the back propagation process. In the embodiment shown in FIG. 6, binarization processing is performed on the target weight in the forward propagation process, and the gradient of the loss function with respect to the target weight is calculated in the back propagation process. Apart from the foregoing, the embodiment shown in FIG. 10 is the same as the embodiment shown in FIG. 6. Therefore, the embodiment shown in FIG. 10 may be understood with reference to the embodiment shown in FIG. 6.

In this embodiment of this application, in the forward propagation process, binarization processing is performed on the activation value of the second neural network layer by using the binarization function, to obtain the input of the first neural network layer in the neural network. In the backward propagation process, the gradient of the loss function with respect to the activation value is calculated by using the gradient of the fitting function as the gradient of the binarization function, to resolve a problem that backward propagation cannot be performed by using the gradient of the binarization function. In addition, the fitting function is determined based on the series expansion of the binarization function. Therefore, a fitting degree between the fitting function and the binarization function is higher, and fitting effect is better. Therefore, training effect of the neural network can be improved, and high accuracy of a trained neural network can be ensured.

An embodiment of this application further provides a network structure of a neural network. The neural network includes a first neural network module, a second neural network module, and a first neural network layer. The first neural network module includes one or more neural network layers, and is configured to implement the binarization processing step in the embodiment shown in FIG. 6. The second neural network module includes one or more neural network layers, and is configured to implement the gradient calculation step in the embodiment shown in FIG. 6.

An embodiment of this application further provides a network structure of a neural network. The neural network includes a first neural network module, a second neural network module, and a first neural network layer. The first neural network module includes one or more neural network layers, and is configured to implement the binarization processing step in the embodiment shown in FIG. 10. The second neural network module includes one or more neural network layers, and is configured to implement the gradient calculation step in the embodiment shown in FIG. 10.

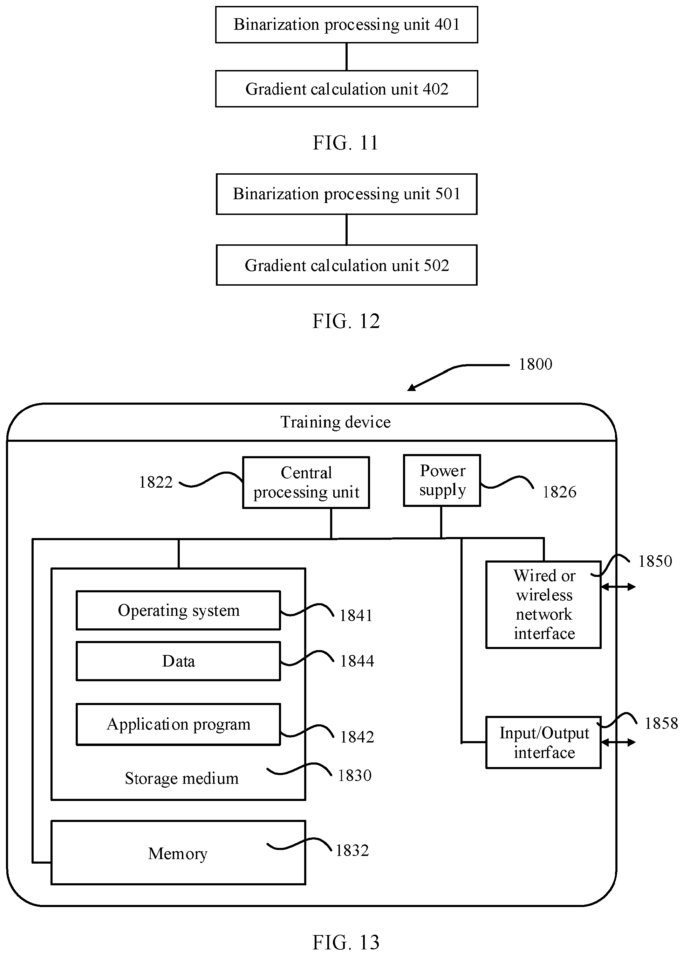

Refer to FIG. 11. An embodiment of this application further provides a neural network training apparatus, including:
a binarization processing unit 401, configured to perform, in a forward propagation process, binarization processing on a target weight by using a binarization function, to obtain a weight of a first neural network layer in a neural network, where the first neural network layer is a neural network layer in the neural network; and
a gradient calculation unit 402, configured to calculate, in a backward propagation process, a gradient of a loss function with respect to the target weight by using a gradient of a fitting function as a gradient of the binarization function, where the fitting function is determined based on series expansion of the binarization function.

In an implementation, a data type of the target weight is a 32-bit floating point type, a 64-bit floating point type, a 32-bit integer type, or an 8-bit integer type.

In an implementation, the fitting function includes a plurality of subfunctions, and the plurality of subfunctions are determined based on the series expansion of the binarization function.

In an implementation, the fitting function includes a plurality of subfunctions and an error function, and the plurality of subfunctions are determined based on the series expansion of the binarization function.

In an implementation, the error function is fitted by a two-layer fully connected neural network with a residual.

In an implementation, the error function is fitted by at least one neural network layer. The gradient calculation unit 402 is specifically configured to calculate, in the backward propagation process, gradients of the plurality of subfunctions with respect to the target weight; calculate a gradient of the at least one neural network layer with respect to the target weight; and calculate the gradient of the loss function with respect to the target weight based on the gradients of the plurality of subfunctions with respect to the target weight and the gradient of the at least one neural network layer with respect to the target weight.

In an implementation, the series expansion of the binarization function is Fourier series expansion of the binarization function, wavelet series expansion of the binarization function, or discrete Fourier series expansion of the binarization function.

For specific implementation, related descriptions, and technical effect of the foregoing units, refer to the descriptions of the embodiment shown in FIG. 6.

Refer to FIG. 12. An embodiment of this application further provides a neural network training apparatus, including:
a binarization processing unit 501, configured to perform, in a forward propagation process, binarization processing on an activation value of a second neural network layer by using a binarization function, to obtain an input of a first neural network layer, where the first neural network layer and the second neural network layer belong to a same neural network; and
a gradient calculation unit 502, configured to calculate, in a backward propagation process, a gradient of a loss function with respect to the activation value by using a gradient of a fitting function as a gradient of the binarization function, where the fitting function is determined based on series expansion of the binarization function.

In an implementation, a data type of the activation value is a 32-bit floating point type, a 64-bit floating point type, a 32-bit integer type, or an 8-bit integer type.

In an implementation, the fitting function includes a plurality of subfunctions, and the plurality of subfunctions are determined based on the series expansion of the binarization function.

In an implementation, the fitting function includes a plurality of subfunctions and an error function, and the plurality of subfunctions are determined based on the series expansion of the binarization function.

In an implementation, the error function is fitted by a two-layer fully connected neural network with a residual.

In an implementation, the error function is fitted by at least one neural network layer. The gradient calculation unit 502 is specifically configured to calculate, in the backward propagation process, gradients of the plurality of subfunctions with respect to the activation value; calculate a gradient of the at least one neural network layer with respect to the activation value; and calculate the gradient of the loss function with respect to the activation value based on the gradients of the plurality of subfunctions with respect to the activation value and the gradient of the at least one neural network layer with respect to the activation value.

In an implementation, the series expansion of the binarization function is Fourier series expansion of the binarization function, wavelet series expansion of the binarization function, or discrete Fourier series expansion of the binarization function.

For specific implementation, related descriptions, and technical effect of the foregoing units, refer to the descriptions of the embodiment shown in FIG. 10.

An embodiment of this application further provides a training device. The training device may be a server. FIG. 13 is a schematic diagram of a structure of a training device according to an embodiment of this application. The neural network training apparatus described in the embodiment corresponding to FIG. 11 or FIG. 12 may be deployed on a training device 1800, and the training device 1800 is configured to implement a function of the neural network training apparatus in the embodiment corresponding to FIG. 11 or FIG. 12. Specifically, the training device 1800 is implemented by one or more servers. The training device 1800 may vary greatly due to different configurations or performance, and may include one or more central processing units (central processing units, CPU) 1822 (for example, one or more processors) and a memory 1832, and one or more storage media 1830 (for example, one or more mass storage devices) for storing an application program 1842 or data 1844. The memory 1832 and the storage media 1830 may be transient storage or persistent storage. A program stored in the storage media 1830 may include one or more modules (not shown in the figure), and each module may include a series of instruction operations for the training device. Further, the central processing unit 1822 may be configured to communicate with the storage media 1830, and perform, on the training device 1800, the series of instruction operations in the storage media 1830.

The training device 1800 may further include one or more power supplies 1826, one or more wired or wireless network interfaces 1850, one or more input/output interfaces 1858, and/or one or more operating systems 1841, such as Windows ServerTM, Mac OS XTM, UnixTM, LinuxTM, and FreeBSDTM.

In this embodiment of this application, the central processing unit 1822 is configured to perform the training method performed by the neural network training apparatus in the embodiments corresponding to FIG. 11 and FIG. 12. Specifically, the central processing unit 1822 may be configured to:
perform, in a forward propagation process, binarization processing on a target weight by using a binarization function, to obtain a weight of a first neural network layer in a neural network, where the first neural network layer is a neural network layer in the neural network; and
calculate, in a backward propagation process, a gradient of a loss function with respect to the target weight by using a gradient of a fitting function as a gradient of the binarization function, where the fitting function is determined based on series expansion of the binarization function.

The central processing unit 1822 may be further configured to:
perform, in the forward propagation process, binarization processing on an activation value of a second neural network layer by using the binarization function, to obtain an input of the first neural network layer, where the first neural network layer and the second neural network layer belong to the same neural network; and
calculate, in the backward propagation process, a gradient of the loss function with respect to the activation value by using the gradient of the fitting function as the gradient of the binarization function, where the fitting function is determined based on the series expansion of the binarization function.

An embodiment of this application further provides a chip, including one or more processors. A part or all of the processors are configured to read and execute a computer program stored in a memory, to perform the method in the foregoing embodiments.

Optionally, the chip further includes the memory, and the memory and the processor are connected through a circuit or a wire. Further optionally, the chip further includes a communication interface, and the processor is connected to the communication interface. The communication interface is configured to receive data and/or information that need to be processed. The processor obtains the data and/or information from the communication interface, processes the data and/or information, and outputs a processing result through the communication interface. The communication interface may be an input/output interface.

In some implementations, a part of the one or more processors may implement a part of steps in the foregoing method in a manner of dedicated hardware. For example, processing related to a neural network model may be implemented by a dedicated neural network processor or a graphics processing unit.

The method provided in embodiments of this application may be implemented by one chip, or may be cooperatively implemented by a plurality of chips.

An embodiment of this application further provides a computer storage medium. The computer storage medium is configured to store computer software instructions used by a computer device, and includes a program designed for execution by the computer device.

The computer device may be the neural network training apparatus described in FIG. 11 or FIG. 12.

An embodiment of this application further provides a computer program product. The computer program product includes computer software instructions, and the computer software instructions may be loaded by a processor to implement the procedures in the methods shown in the foregoing embodiments.

An embodiment of this application further provides a server. The server may be a common server, or may be a cloud server, and is configured to perform the method in the embodiment shown in FIG. 6 and/or FIG. 10.

An embodiment of this application further provides a terminal device. A neural network trained by using the method in the embodiment shown in FIG. 6 and/or FIG. 10 is deployed on the terminal device.

The terminal device may be any terminal device on which a neural network can be deployed. Because the neural network trained by using the method in embodiments of this application is a compressed binary neural network, the neural network occupies small storage space and has a high operation speed. However, compared with a conventional uncompressed neural network, the neural network has slightly lower precision.

Therefore, the neural network trained by using the method in embodiments of this application are mostly deployed in a terminal device with limited storage space or a limited computing capability. For example, storage space and a computing capability of a mobile terminal device are limited. Therefore, the terminal device in this embodiment of this application may be the mobile terminal device, and may be specifically a mobile phone, a tablet computer, a vehicle-mounted device, a camera, a robot, or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a computer software product. The computer software product is stored in a storage medium and includes several instructions for instructing a computer device (which may be a personal computer, a server, or a network device) to perform all or a part of the steps of the methods described in embodiments of this application. The storage medium includes any medium that can store program code, such as a USB flash drive, a removable hard disk, a read-only memory (ROM), a random access memory (RAM), a magnetic disk, or an optical disc.

## Claims

1. A neural network training method performed by a neural network training apparatus for training a neural network, the trained neural network being used for image classification, image segmentation, target image detection or super-resolution image reconstruction, the method comprising the steps of:
• performing (step 101), in a forward propagation process, binarization processing on a target weight by using a periodic binarization function, to obtain a weight of a first neural network layer in the neural network; and
• calculating (step 102), in a backward propagation process, a gradient of a loss function with respect to the target weight by using a gradient of a fitting function as a gradient of the binarization function, wherein the fitting function is determined based on a series expansion of the binarization function, wherein the fitting function comprises a plurality of subfunctions and an error function, and the plurality of subfunctions is determined based on the series expansion of the binarization function, wherein the error function is fitted by a two-layer fully connected neural network with a residual, the two-layer fully connected neural network being a part of the neural network,
and the calculating, in the backward propagation process, the gradient of the loss function with respect to the target weight by using the gradient of the fitting function as the gradient of the binarization function comprises:
∘ calculating, in the backward propagation process, gradients of the plurality of subfunctions with respect to the target weight;
∘ calculating a gradient of the two-layer fully connected neural network with a residual with respect to the target weight; and
∘ calculating the gradient of the loss function with respect to the target weight based on the gradients of the plurality of subfunctions with respect to the target weight and the gradient of the two-layer fully connected neural network with a residual with respect to the target weight.

2. A neural network training method performed by a neural network training apparatus for training a neural network, the trained neural network being used for image classification, image segmentation, target image detection or super-resolution image reconstruction, the method comprising the steps of:
• performing (step 301), in a forward propagation process, binarization processing on an activation value of a second neural network layer by using a periodic binarization function, to obtain an input of a first neural network layer, wherein the first neural network layer and the second neural network layer are neural network layers of the neural network; and
• calculating (step 302), in a backward propagation process, a gradient of a loss function with respect to the activation value by using a gradient of a fitting function as a gradient of the binarization function, wherein the fitting function is determined based on a series expansion of the binarization function, wherein the fitting function comprises a plurality of subfunctions and an error function, and the plurality of subfunctions is determined based on the series expansion of the binarization function, wherein the error function is fitted by a two-layer fully connected neural network with a residual, the two-layer fully connected neural network being a part of the neural network; and
the calculating, in the backward propagation process, the gradient of the loss function with respect to the activation value by using the gradient of the fitting function as the gradient of the binarization function comprises:
∘ calculating, in the backward propagation process, gradients of the plurality of subfunctions with respect to the activation value;
∘ calculating a gradient of the two-layer fully connected neural network with a residual with respect to the activation value; and
∘ calculating the gradient of the loss function with respect to the activation value based on the gradients of the plurality of subfunctions with respect to the activation value and the gradient of the two-layer fully connected neural network with a residual with respect to the activation value.

3. The training method according to any one of claims 1 to 2, wherein the series expansion of the binarization function is a Fourier series expansion of the binarization function, a wavelet series expansion of the binarization function, or a discrete Fourier series expansion of the binarization function.

4. The training method according to any one of claims 1 to 3, wherein a data type of the target weight is a 32-bit floating point type, a 64-bit floating point type, a 32-bit integer type, or an 8-bit integer type.

5. A neural network training apparatus configured to perform the method according to any of claims 1 to 4.

6. A computer-readable storage medium comprising computer-readable instructions, wherein, when the computer-readable instructions are run on a neural network training apparatus, the neural network training apparatus is caused to perform the method according to any one of claims 1 to 4.

## Patentansprüche

1. Trainingsverfahren für ein neuronales Netz, das durch eine Trainingseinrichtung für ein neuronales Netz zum Trainieren eines neuronalen Netzes durchgeführt wird, wobei das trainierte neuronale Netz zur Bildklassifizierung, Bildsegmentierung, Zielbilderkennung oder hochauflösenden Bildrekonstruktion verwendet wird, wobei das Verfahren die folgenden Schritte umfasst:
• Durchführen (Schritt 101), in einem Vorwärtsausbreitungsvorgang, von Binarisierungsverarbeitung eines Zielgewichtes mittels einer periodischen Binarisierungsfunktion, um ein Gewicht einer ersten Schicht des neuronalen Netzes in dem neuronalen Netz zu erlangen; und
• Berechnen (Schritt 102), in einem Rückwärtsausbreitungsvorgang, eines Gradienten einer Verlustfunktion bezüglich des Zielgewichtes mittels eines Gradienten einer Anpassungsfunktion als einen Gradienten der Binarisierungsfunktion, wobei die Anpassungsfunktion basierend auf einer Reihenentwicklung der Binarisierungsfunktion bestimmt wird und eine Vielzahl von Teilfunktionen sowie eine Fehlerfunktion umfasst und die Vielzahl von Teilfunktionen basierend auf der Reihenentwicklung der Binarisierungsfunktion bestimmt wird, wobei die Fehlerfunktion durch ein zweischichtiges, vollständig verbundenes neuronales Netz mit einem Residuum angepasst wird, wobei das zweischichtige, vollständig verbundene neuronale Netz Teil des neuronalen Netzes ist,
und das Berechnen, in dem Rückwärtsausbreitungsvorgang, des Gradienten der Verlustfunktion bezüglich des Zielgewichtes mittels des Gradienten der Anpassungsfunktion als den Gradienten der Binarisierungsfunktion Folgendes umfasst:
∘ Berechnen, in dem Rückwärtsausbreitungsvorgang, von Gradienten der Vielzahl von Teilfunktionen bezüglich des Zielgewichtes;
∘ Berechnen eines Gradienten des zweischichtigen, vollständig verbundenen neuronalen Netzes mit einem Residuum bezüglich des Zielgewichtes; und
∘ Berechnen des Gradienten der Verlustfunktion bezüglich des Zielgewichtes basierend auf den Gradienten der Vielzahl von Teilfunktionen bezüglich des Zielgewichtes und des Gradienten des zweischichtigen, vollständig verbundenen neuronalen Netzes mit einem Residuum bezüglich des Zielgewichtes.

2. Trainingsverfahren für ein neuronales Netz, das durch eine Trainingseinrichtung für ein neuronales Netz zum Trainieren eines neuronalen Netzes durchgeführt wird, wobei das trainierte neuronale Netz zur Bildklassifizierung, Bildsegmentierung, Zielbilderkennung oder hochauflösenden Bildrekonstruktion verwendet wird, wobei das Verfahren die folgenden Schritte umfasst:
• Durchführen (Schritt 301), in einem Vorwärtsausbreitungsvorgang, einer Binarisierungsverarbeitung eines Aktivierungswerts einer zweiten Schicht des neuronalen Netzes mittels einer periodischen Binarisierungsfunktion, um eine Eingabe für eine erste Schicht des neuronalen Netzes zu erlangen, wobei die erste Schicht des neuronalen Netzes und die zweite Schicht des neuronalen Netzes neuronale Netzschichten des neuronalen Netzes sind; und
• Berechnen (Schritt 302), in einem Rückwärtsausbreitungsvorgang, eines Gradienten einer Verlustfunktion bezüglich des Aktivierungswertes mittels eines Gradienten einer Anpassungsfunktion als einen Gradienten der Binarisierungsfunktion, wobei die Anpassungsfunktion basierend auf einer Reihenentwicklung der Binarisierungsfunktion bestimmt wird und eine Vielzahl von Teilfunktionen sowie eine Fehlerfunktion umfasst und die Vielzahl der Teilfunktionen basierend auf der Reihenentwicklung der Binarisierungsfunktion bestimmt wird, wobei die Fehlerfunktion durch ein zweischichtiges, vollständig verbundenes neuronales Netz mit einem Residuum angepasst wird, wobei das zweischichtige, vollständig verbundene neuronale Netz Teil des neuronalen Netzes ist; und
das Berechnen, in dem Rückwärtsausbreitungsvorgang, des Gradienten der Verlustfunktion bezüglich des Aktivierungswertes mittels des Gradienten der Anpassungsfunktion als den Gradienten der Binarisierungsfunktion Folgendes umfasst:
∘ Berechnen, in dem Rückwärtsausbreitungsvorgang, von Gradienten der Vielzahl von Teilfunktionen bezüglich des Aktivierungswertes;
∘ Berechnen eines Gradienten des zweischichtigen, vollständig verbundenen neuronalen Netzes mit einem Residuum bezüglich des Aktivierungswertes; und
∘ Berechnen des Gradienten der Verlustfunktion bezüglich des Aktivierungswertes basierend auf den Gradienten der Vielzahl von Teilfunktionen bezüglich des Aktivierungswertes und des Gradienten des zweischichtigen, vollständig verbundenen neuronalen Netzes mit einem Residuum bezüglich des Aktivierungswertes.

3. Trainingsverfahren nach einem der Ansprüche 1 oder 2, wobei die Reihenentwicklung der Binarisierungsfunktion eine Fourier-Reihenentwicklung der Binarisierungsfunktion, eine Wavelet-Reihenentwicklung der Binarisierungsfunktion oder eine diskrete Fourier-Reihenentwicklung der Binarisierungsfunktion ist.

4. Trainingsverfahren nach einem der Ansprüche 1 bis 3, wobei ein Datentyp des Zielgewichtes ein 32-Bit-Gleitkommatyp, ein 64-Bit-Gleitkommatyp, ein 32-Bit-Ganzzahltyp oder ein 8-Bit-Ganzzahltyp ist.

5. Trainingseinrichtung für ein neuronales Netz, die dazu konfiguriert ist, das Verfahren nach einem der Ansprüche 1 bis 4 durchzuführen.

6. Computerlesbares Speichermedium, umfassend computerlesbare Anweisungen, wobei, wenn die computerlesbaren Anweisungen auf einer Trainingseinrichtung für ein neuronales Netz ausgeführt werden, die Trainingseinrichtung für ein neuronales Netz dazu veranlasst wird, das Verfahren nach einem der Ansprüche 1 bis 4 durchzuführen.

## Revendications

1. Procédé de formation de réseau neuronal réalisé par un appareil de formation de réseau neuronal destiné à former un réseau neuronal, le réseau neuronal formé étant utilisé pour la classification d'images, la segmentation d'images, la détection d'images cibles ou la reconstruction d'images à super-résolution, le procédé comprenant les étapes suivantes :
• la réalisation (étape 101), lors d'un processus de propagation avant, d'un traitement de binarisation sur un poids cible à l'aide d'une fonction de binarisation périodique, pour obtenir un poids d'une première couche de réseau neuronal dans le réseau neuronal ; et
• le calcul (étape 102), lors d'un processus de rétropropagation, d'un gradient d'une fonction de perte par rapport au poids cible en utilisant un gradient d'une fonction d'ajustement en tant que gradient de la fonction de binarisation, dans lequel la fonction d'ajustement est déterminée sur la base d'un développement en série de la fonction de binarisation, dans lequel la fonction d'ajustement comprend une pluralité de sous-fonctions et une fonction d'erreur, et la pluralité de sous-fonctions est déterminée sur la base du développement en série de la fonction de binarisation, dans lequel la fonction d'erreur est ajustée par un réseau neuronal entièrement connecté à deux couches avec un résidu, le réseau neuronal entièrement connecté à deux couches faisant partie du réseau neuronal,
et le calcul, lors du processus de rétropropagation, du gradient de la fonction de perte par rapport au poids cible en utilisant le gradient de la fonction d'ajustement en tant que gradient de la fonction de binarisation comprend :
∘ le calcul, lors du processus de rétropropagation, de gradients de la pluralité de sous-fonctions par rapport au poids cible ;
∘ le calcul d'un gradient du réseau neuronal entièrement connecté à deux couches avec un résidu par rapport au poids cible ; et
∘ le calcul du gradient de la fonction de perte par rapport au poids cible sur la base des gradients de la pluralité de sous-fonctions par rapport au poids cible et du gradient du réseau neuronal entièrement connecté à deux couches avec un résidu par rapport au poids cible.

2. Procédé de formation de réseau neuronal réalisé par un appareil de formation de réseau neuronal destiné à former un réseau neuronal, le réseau neuronal formé étant utilisé pour la classification d'images, la segmentation d'images, la détection d'images cibles ou la reconstruction d'images à super-résolution, le procédé comprenant les étapes suivantes :
• la réalisation (étape 301), lors d'un processus de propagation avant, d'un traitement de binarisation sur une valeur d'activation d'une seconde couche de réseau neuronal en utilisant une fonction de binarisation périodique, pour obtenir une entrée d'une première couche de réseau neuronal, dans lequel la première couche de réseau neuronal et la seconde couche de réseau neuronal sont des couches de réseau neuronal du réseau neuronal ; et
• le calcul (étape 302), lors d'un processus de rétropropagation, d'un gradient d'une fonction de perte par rapport à la valeur d'activation en utilisant un gradient d'une fonction d'ajustement en tant que gradient de la fonction de binarisation, dans lequel la fonction d'ajustement est déterminée sur la base d'un développement en série de la fonction de binarisation, dans lequel la fonction d'ajustement comprend une pluralité de sous-fonctions et une fonction d'erreur, et la pluralité de sous-fonctions est déterminée sur la base du développement en série de la fonction de binarisation, dans lequel la fonction d'erreur est ajustée par un réseau neuronal entièrement connecté à deux couches avec un résidu, le réseau neuronal entièrement connecté à deux couches faisant partie du réseau neuronal ; et
le calcul, lors du processus de rétropropagation, du gradient de la fonction de perte par rapport à la valeur d'activation en utilisant le gradient de la fonction d'ajustement en tant que gradient de la fonction de binarisation comprend :
∘ le calcul, lors du processus de rétropropagation, de gradients de la pluralité de sous-fonctions par rapport à la valeur d'activation ;
∘ le calcul d'un gradient du réseau neuronal entièrement connecté à deux couches avec un résidu par rapport à la valeur d'activation ; et
∘ le calcul du gradient de la fonction de perte par rapport à la valeur d'activation sur la base des gradients de la pluralité de sous-fonctions par rapport à la valeur d'activation et du gradient du réseau neuronal entièrement connecté à deux couches avec un résidu par rapport à la valeur d'activation.

3. Procédé de formation selon l'une quelconque des revendications 1 et 2, dans lequel le développement en série de la fonction de binarisation est un développement en série de Fourier de la fonction de binarisation, un développement en série d'ondelettes de la fonction de binarisation ou un développement en série de Fourier discret de la fonction de binarisation.

4. Procédé de formation selon l'une quelconque des revendications 1 à 3, dans lequel un type de données du poids cible est un type à virgule flottante 32 bits, un type à virgule flottante 64 bits, un type entier 32 bits ou un type entier 8 bits.

5. Appareil de formation de réseau neuronal configuré pour réaliser le procédé selon l'une quelconque des revendications 1 à 4.

6. Support de stockage lisible par ordinateur comprenant des instructions lisibles par ordinateur, dans lequel, lorsque les instructions lisibles par ordinateur sont exécutées sur un appareil de formation de réseau neuronal, l'appareil de formation de réseau neuronal est amené à réaliser le procédé selon l'une quelconque des revendications 1 à 4.
